# EUROPÄISCHE PATENTSCHRIFT

(11) **EP 2 237 128 B1**
(45) Veröffentlichungstag und Bekanntmachung des Hinweises auf die Patenterteilung: **04.04.2012**
(21) Anmeldenummer: 10003415.6
(22) Anmeldetag: 30.03.2010
(51) Int. Cl.: G05D 16/20

(54) **Vorgesteuerte Druckproportionalventilanordnung mit einer durch eine elektronische Regelungseinrichtung angesteuerten Vorsteuerstufe**
Pilot operated proportional pressure valve assembly with electronic pre-controller
Agencement de vanne de pression proportionnelle avec pré-contrôle commandé par un dispositif de régulation électronique

(30) Priorität: 02.04.2009 DE 102009015999
(43) Veröffentlichungstag der Anmeldung: 06.10.2010
(73) Patentinhaber: FESTO AG & Co. KG, 73734 Esslingen (DE)
(72) Erfinder: Risle, Andreas, 73734 Esslingen (DE)
(74) Vertreter: Kocher, Mark Werner

(56) Entgegenhaltungen:
- EP-A2- 0 634 713
- US-A- 4 638 837
- US-A1- 2002 036 013
- US-A1- 2008 023 662

## Beschreibung

Die Erfindung betrifft eine vorgesteuerte Druckproportionalventilanordnung mit einer durch eine elektronische Regelungseinrichtung angesteuerten Vorsteuerstufe und einer ein Ventilglied aufweisenden druckgeregelten Hauptstufe mit den Merkmalen des Oberbegriffs des Anspruchs 1.

Aus der DE 298 09 412 U1 ist eine vorgesteuerte Druckproportionalventilanordnung bekannt, wobei das Druckregelventil eine Vorsteuerkammer besitzt, die mittels eines Belüftungsventils und eines Entlüftungsventils mit Steuerdruck beaufschlagbar ist. Als bewegliche Trennwand zwischen der Vorsteuerkammer und einer Arbeitskammer ist ein Kolben vorgesehen.

Die US 4,638,837 A offenbart ein elektropneumatisches Proportionalventil mit einem Gehäuse, in dem ein oberer und ein unterer Raum ausgebildet sind, die durch einen ringförmigen Flansch bereichsweise voneinander getrennt sind. Im unteren Raum ist ein Arbeitskolben angeordnet, der mit Hilfe eines druckbeaufschlagten Fluids ein Ventilglied, das zur abdichtenden Anlage am umlaufenden Flansch ausgebildet ist, zwischen einer Schließstellung und einer Öffnungsstellung bewegen kann, um einen Strömungsquerschnitt zwischen dem oberen Raum und dem unteren Raum zu beeinflussen.

Für die Ansteuerung des Arbeitskolbens sind dem unteren Raum ein Eingangsanschluss und ein Ausgangsanschluss zugeordnet, durch die druckbeaufschlagtes Fluid zu- bzw. abgeführt werden kann. Das mit Hilfe des Proportionalventils zu steuernde Fluid wird an einem Versorgungsanschluss in den oberen Raum zugeführt und kann durch einen Arbeitsanschluss aus dem unteren Raum abströmen. Für die Ansteuerung des Arbeitskolbens ist eine Ansteuervorrichtung vorgesehen, die die Zu- und Abfuhr von druckbeaufschlagtem Fluid in den unteren Arbeitsraum steuert

Aus der US2008/0023662 A1 ist ein multifunktionales Regelventil bekannt, das einen Steuerkolben umfasst, der mittels einer ringförmig umlaufenden Membran abdichtend in einem Gehäuse aufgenommen ist und einen ersten Gehäuseraum von einem zweiten Gehäuseraum abtrennt. Bei Druckbeaufschlagung des ersten Gehäuseraums wird der Steuerkolben linear bewegt und kann über einen Kolbenstange ein Kugelventil in einer Versorgungsleitung aus einer federvorgespannten Schließstellung in eine Öffnungsstellung bringen. Für eine Bereitstellung von druckbeaufschlagtem Fluid in den ersten Gehäuseraum ist eine Steuereinrichtung vorgesehen, die Steuerventile in einer Zufuhrleitung und in einer Abfuhrleitung ansteuern kann, um die gewünschte Positionierung des Steuerkolbens und damit das Öffnen oder Schließen des Kugelventils zu ermöglichen.

Die US 2002/0036013 A1 offenbart einen Druckregler, der einen Steuerkolben umfasst, der in einer Druckkammer aufgenommen ist und diese Druckkammer mittels einer umlaufenden Ringmembran gegenüber dem Umgebungsdruck abschottet. Der Steuerkolben ist über eine Kolbenstange mit einem Ventilglied verbunden, das linearbeweglich gegenüber einem Ventilsitz angeordnet ist und einen Strömungsquerschnitt zwischen einem Versorgungsanschluss und einem Arbeitsanschluss beeinflussen kann.

Zur Einstellung einer linearen Position des Steuerkolbens ist eine Ventilanordnung vorgesehen, die aus mehreren Schaltventilen besteht, die mit einer Steuerungseinrichtung verbunden sind. Mittels der Steuerungseinrichtung und der Schaltventile kann die Position des Ventilglieds gegenüber dem Ventilsitz eingestellt werden.

Aus der DE 694 22 341 T2 ist bekannt, die Steuerung von Entlüftungsventilen unter Berücksichtigung von Soll- und IstWerten vorzunehmen.

Übliche Druckproportionalventile weisen zwei Betriebszustände auf, den Druckregelmodus und einen Null-Abschaltmodus. Der Druckregelmodus ist im zulässigen Solldruckbereich aktiv, der in der Regel von 1 % des maximalen Betriebsdrucks bis zum maximalen Betriebsdruck reicht. Wird der zulässige Mindestsollwert unterschritten, so geht das Ventil in den Null-Abschaltmodus über, und der Arbeitsanschluss wird in einen gesteuerten Dauerentlüftungszustand gebracht, der so lange aufrechterhalten werden muss, bis die Sollwertvorgabe den zulässigen Mindestwert wieder übersteigt. Um die Vorsteuerkammer hierzu sicher zu entlüften, wird in bekannter Weise das Belüftungsventil deaktiviert beziehungsweise geschlossen, und das Entlüftungsventil der Vorsteuerstufe wird so lange betätigt, bis der Null-Abschaltmodus beendet ist, der Sollwert also wieder über den zulässigen Mindestsollwert ansteigt. Da dieser Betriebszustand, also der Null-Abschaltmodus, in der Praxis recht häufig und auch über längere Zeiträume hinweg vorliegt, führt dies durch die Dauer der Betätigung zu einer starken Erwärmung des Entlüftungsventils und eine entsprechende wärmeabstrahlung an die Umgebung. Weiterhin führt der hohe Energieverbrauch durch die Dauerbestromung des Entlüftungsventils zu einer schlechten Energieeffizienz. Darüber hinaus ergeben sich Lebensdauerprobleme und Montagmorgeneffekte bei den Vorsteuerventilen.

Eine Aufgabe der vorliegenden Erfindung besteht darin, eine vorgesteuerte Druckproportionalventilanordnung der eingangs genannten Gattung zu schaffen, bei der im Null-Abschaltmodus eine sichere Entlüftung der Vorsteuerkammer und damit der Arbeitskammer bei nur geringem Energiebedarf gewährleistet wird, ohne dass die beschriebenen Wärmeprobleme entstehen.

Diese Aufgabe wird erfindungsgemäß durch eine vorgesteuerte Druckproportionalventilanordnung mit den Merkmalen des Anspruchs 1 gelöst.

Die erfindungsgemäße Lösung hat den Vorteil, dass das Entlüftungsventil im Null-Abschaltmodus immer nur kurzzeitig betätigt wird, nämlich lediglich bis der Ist-Arbeitsdruck unter den vorgebbaren Ist-Grenzwerten abgesunken ist. Hierdurch wird der Energieverbrauch deutlich reduziert und eine Erwärmung des Entlüftungsventils und die entsprechende Wärmeabstrahlung an die Umgebung verhindert. Gleichzeitig erhöht sich die Lebensdauer.

Durch die in den Unteransprüchen aufgeführten Maßnahmen sind vorteilhafte weiterbildungen und Verbesserungen der im Anspruch 1 angegebenen Druckproportionalventilanordnung möglich.

In vorteilhafter Weise kann die Regelungseinrichtung noch zweite Steuermittel zum zyklischen, jeweils kurzzeitigen Öffnen des Entlüftungsventils während der Vorgabe eines unter dem vorgebbaren Soll-Grenzwert liegenden Soll-Arbeitsdrucks und nach dem Schließen des Entlüftungsventils durch die ersten Steuermittel aufweisen. Hierdurch wird wirksam verhindert, dass sich das Ventilglied in unerwünschter Weise öffnet, wenn beispielsweise durch einen Defekt des Belüftungsventils oder aufgrund anderer Defekte die Vorsteuerkammer belüftet wird. Ein eventueller Druckanstieg durch eine solche Fehlfunktion wird durch das zyklische Öffnen des Entlüftungsventils wirksam verhindert. Dieses kurzzeitige Öffnen des Entlüftungsventils erfolgt bevorzugt während einer Zeitspanne von weniger als 1 Sekunde, wobei die zykluszeit insbesondere mehrere Sekunden beträgt. Hierdurch wird der Energieverbrauch des Entlüftungsventils nur unwesentlich erhöht.

Eine noch größere Sicherheit gegen ein unerwünschtes Öffnen des Ventilglieds wird dadurch erreicht, dass die Regelungseinrichtung dritte Steuermittel zum Öffnen des Entlüftungsventils bei Ansteigen des Ist-Arbeitsdrucks über den vorgebbaren Ist-Grenzwert aufweist. Sollte also trotz zyklischem Öffnen des Entlüftungsventils der Druck in der Vorsteuerkammer in unerwünschter Weise ansteigen, so wird dies bei Erreichen des vorgebbaren Ist-Grenzwerts wirksam durch die dritten Steuermittel verhindert.

Der Soll-Grenzwert ist bevorzugt kleiner als 3 % des maximalen Arbeitsdrucks und beträgt vorzugsweise im Wesentlichen 1 % des maximalen Arbeitsdrucks, während der Ist-Grenzwert deutlich kleiner ist und nahe bei Null liegt.

In einer vorteilhaften Ausgestaltung der Erfindung sind die Steuermittel als wenigstens ein Mikrocontroller ausgebildet, der insbesondere auch zur Druckregelung durch die elektronische Regelungseinrichtung mittels des Belüftungsventils und des Entlüftungsventils ausgebildet ist.

Zur Messung des Arbeitsdrucks in der Arbeitskammer oder im Bereich von deren Auslass ist zweckmäßigerweise ein Drucksensor als Istwertgeber angeordnet und mit der Regelungseinrichtung verbunden. Prinzipiell kann dieser Drucksensor auch in der Vorsteuerkammer angeordnet sein, da ein direkter Zusammenhang zwischen Vorsteuerdruck und Arbeitskammerdruck besteht.

Als zweckmäßige konstruktive Ausgestaltung ist die bewegliche Trennwand bevorzugt als Membran oder Kolben ausgebildet.

Das Belüftungsventil und das Entlüftungsventil sind im nicht bestromten Zustand geschlossen und verbrauchen dadurch in diesem Ruhezustand keine Energie und erzeugen keine unerwünschte Wärme.

Das ventilglied weist zweckmäßigerweise eine gegen die Öffnungsbewegung wirkende Feder auf.

In einer zweckmäßigen konstruktiven Ausgestaltung besitzt das Ventilglied einen in der Arbeitskammer mündenden Entlüftungskanal, der bei entsprechender Druckbeaufschlagung der Vorsteuerkammer durch die bewegbare Trennwand verschließbar ist, insbesondere gegen die Kraft einer Feder.

Ein Ausführungsbeispiel der Erfindung ist in der Zeichnung dargestellt und in der nachfolgenden Beschreibung näher erläutert. Es zeigen:
- Figur 1: eine Schnittdarstellung eines Druckproportionalven- tils, das durch eine elektronische Regelungsein- richtung über ein Belüftungsventil und ein Entlüf- tungsventil steuerbar beziehungsweise regelbar ist, als Ausführungsbeispiel der Erfindung und
- Figur 2: ein Flussdiagramm zur Erläuterung der Wirkungs- weise.

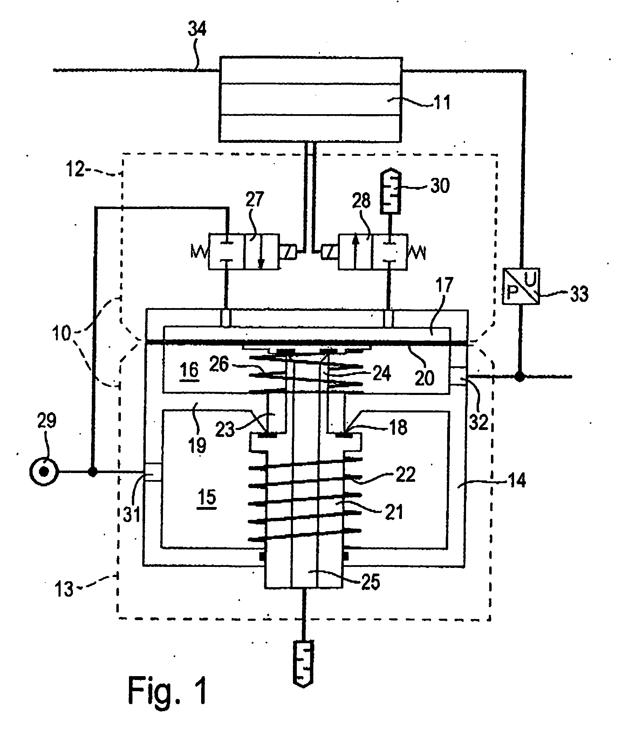

Die in Figur 1 als Ausführungsbeispiel dargestellte vorgesteuerte Druckproportionalventilanordnung besteht im Wesentlichen aus einem Druckproportionalventil 10, das von einer elektronischen Regelungseinrichtung 11 gesteuert wird, wobei das Druckproportionalventil 10 eine Vorsteuerstufe 12 und eine Hauptstufe 13 aufweist.

Ein Gehäuse 14 des Druckproportionalventils 10 weist eine erste, als Einlasskammer 15 ausgebildete Kammer, eine zweite, als Arbeitskammer 16 ausgebildete Kammer und eine dritte, als Vorsteuerkammer 17 ausgebildete Kammer auf. Zwischen der Arbeitskammer 16 und der Einlasskammer 15 befindet sich eine einen Ventilsitz 18 aufweisende Zwischenwandung 19, und die Arbeitskammer 16 ist von der Vorsteuerkammer 17 durch eine als Membran ausgebildete bewegliche Trennwand 20 getrennt.

Ein Ventilglied 21 erstreckt sich durch die Einlasskammer 15 und verschließt im drucklosen Zustand durch die Kraft einer Feder 22 den Ventilsitz 18, so dass kein Fluid von der Einlasskammer 15 durch eine Verbindungsöffnung 23 zur Arbeitskammer 16 gelangen kann. Eine Verlängerung 24 des Ventilglieds 21 erstreckt sich durch diese Verbindungsöffnung 23 bis zur Trennwand 20 und liegt an dieser in Abhängigkeit der jeweiligen Druckverhältnisse an oder nicht an. Ein Entlüftungskanal 25 erstreckt sich in Längsrichtung durch das Ventilglied 21 und die Verlängerung 24 und wird im Falle des Anliegens an der Trennwand 20 durch diese dichtend verschlossen. Ist der Fluiddruck in der Arbeitskammer 16 größer als der in der Vorsteuerkammer 17, so hebt die bewegliche Trennwand 20 unterstützt durch eine Feder 26 von der Verlängerung 24 ab, so dass der Entlüftungskanal 25 zur Entlüftung der Arbeitskammer 16 geöffnet wird.

Während die Einlasskammer 15 und die Arbeitskammer 16 zusammen mit dem Ventilglied 21 die Hauptstufe 13 bilden, weist die Vorsteuerstufe 12 die Vorsteuerkammer 17, ein damit verbundenes Belüftungsventil 27 und ein damit verbundenes Entlüftungsventil 28 auf. Diese beiden Ventile 27, 28 sind als elektrisch steuerbare Ventile, beispielsweise als Magnetventile, ausgebildet und werden durch die elektronische Regelungseinrichtung 11 gesteuert. Das Belüftungsventil 27 ist zur Belüftung der Vorsteuerkammer 17 mit einer fluidischen Druckquelle 29 verbunden, während das Entlüftungsventil 28 mit einem Auslass 30 in die Umgebung verbunden ist.

Das Belüftungsventil 27 und das Entlüftungsventil 28 sind beispielsweise als 2/2-Wegeventil ausgebildet, wobei im stromlosen Zustand beide Ventile geschlossen sind.

Als bewegliche Trennwand 20 kann anstelle einer Membran beispielsweise auch ein Kolben eingesetzt werden, wie dies im eingangs angegebenen Stand der Technik beschrieben ist.

Die fluidische Druckquelle 29 ist mit einem Einlass 31 der Einlasskammer 15 verbunden, und die Arbeitskammer 16 weist einen den geregelten Arbeitsdruck an einen nicht dargestellten Verbraucher weitergebenden Auslass 32 auf. Ein den Arbeitsdruck als Istwert erfassender Drucksensor 33 ist im Bereich des Auslasses 32 angeordnet, könnte prinzipiell jedoch auch in der Arbeitskammer 16 oder auch in der Vorsteuerkammer 17 angeordnet sein. Dieser Drucksensor 33 führt den erfassten Istwert der elektronischen Regelungseinrichtung 11 zu. Dieser wird über einen Sollwert-Eingang 34 ein Soll-Arbeitsdruck für die Regelung vorgegeben. Dieser kann an der Regelungseinrichtung 11 eingestellt oder von einer externen Einrichtung zugeführt werden.

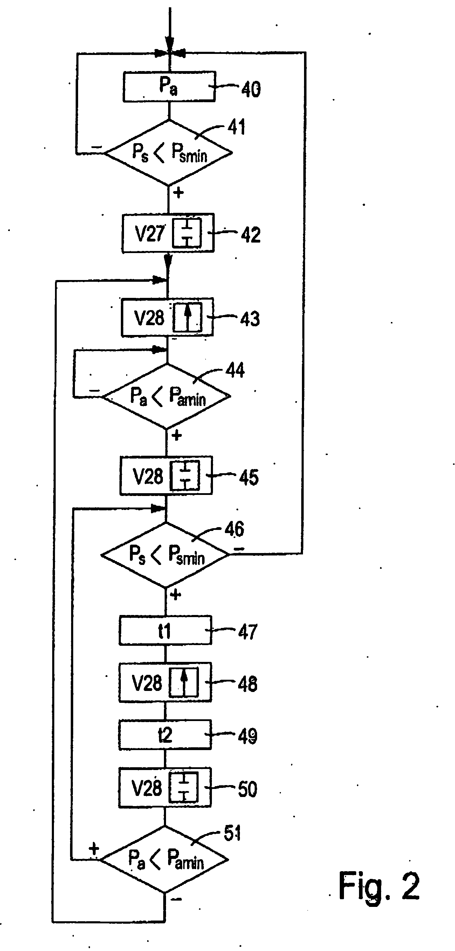

Die Wirkungsweise der Druckregelung selbst, also der Regelung des Arbeitsdrucks im Druckregelmodus, ist nicht Gegenstand der vorliegenden Erfindung. Hierzu wird auf den eingangs angegebenen Stand der Technik verwiesen. Gegenstand ist vielmehr der Null-Abschaltmodus, der bei Unterschreitung eines zulässigen Mindestsollwerts vorgegeben wird. In diesem Null-Abschaltmodus wird der Arbeitsdruck auf den Wert null oder nahe dem Wert null gehalten. Zur Erläuterung der wirkungsweise dient das in Figur 2 dargestellte Flussdiagramm, das im Folgenden erläutert werden soll.

Im regulären Druckregelmodus 40 zur Regelung des Arbeitsdrucks Pa auf den vorgegebenen Drucksollwert Ps wird in einer Abfragefolge 41 in sich wiederholenden Schritten abgefragt, ob der Drucksollwert Ps unter einen minimalen Drucksollwert Psmin abgesunken ist. Dieser minimale Drucksollwert Psmin wird beispielsweise auf 1 % des maximalen Betriebsdrucks festgelegt, kann jedoch auch in diesem niedrigen Druckbereich variieren.

Wird eine solche Unterschreitung festgestellt (+), dann wird im Schritt 42 das Belüftungsventil 27 geschlossen und im Schritt 43 das Entlüftungsventil 28 geöffnet. Dadurch sinkt der Druck in der Vorsteuerkammer 17 und entsprechend durch Abheben der Trennwand 20 von der Verlängerung 24 des Ventilglieds 21 auch der Druck in der Arbeitskammer 16, also der Arbeitsdruck, ab. In der nachfolgenden Abfragefolge 44 wird dann geprüft, ob der Arbeitsdruck Pa einen festgelegten vorgegebenen Ist-Grenzwert beziehungsweise minimalen Arbeitsdruck Pamin unterschreitet, der wesentlich niedriger als der Soll-Grenzwert ist und beispielsweise nahe am Wert Null liegt. Wird eine solche Unterschreitung festgestellt (+), dann wird im Schritt 45 das Entlüftungsventil 28 geschlossen. Dieses ist daher jeweils nur während einer relativ kurzen Bestromungsphase geöffnet.

Nun wird im Abfrageschritt 46 geprüft, ob der vorgegebene Drucksollwert Ps immer noch unterhalb des vorgegebenen Soll-Grenzwerts Psmin liegt, also immer noch der Null-Abschaltmodus vorliegt. Ist dies nicht der Fall (-), dann wird wieder in den Druckregelmodus 40 umgeschaltet. Im anderen Falle, also bei weiterbestehendem Null-Abschaltmodus (+), wird das Entlüftungsventil 28 gemäß den Schritten 47 in Verbindung mit dem Abfrageschritt 51 zyklisch betätigt, um sicherzustellen, dass beispielsweise bei nicht korrekt arbeitendem Belüftungsventil 27 der Druck in der Vorsteuerkammer 17 nicht unzulässig ansteigt. Jeweils nach einer Zykluszeit t1 von mehreren Sekunden oder auch nach wesentlich kürzerer Zeit wird das Entlüftungsventil 28 geöffnet, für eine sehr kurze Zeit t2 von beispielsweise unter 1 Sekunde geöffnet gehalten und dann wieder geschlossen. Wird im Abfrageschritt 51 dann festgestellt, dass der Arbeitsdruck Pa immer noch unterhalb des vorgegebenen Ist-Grenzwerts Pamin liegt (+), dann werden die Schritte 46 bis 50 wiederholt, das zyklische Öffnen des Entlüftungsventils 28 wird also fortgesetzt. Diese Schleife wird so lange noch laufen, bis entweder im Abfrageschritt 51 festgestellt wird, dass der Ist-Grenzwert des Arbeitsdrucks Pamin überschritten wird (-), dann wird im Schritt 43 das Entlüftungsventil geöffnet und die bereits beschriebene Schrittfolge wieder durchlaufen. Wenn jedoch in dieser Schleife der Soll-Grenzwert Psmin überschritten wird, was im Abfrageschritt 46 festgestellt wird, dann wird in den Druckregelmodus 40 zurückgeschaltet.

In einer einfacheren Ausführungsvariante kann auch auf den Abfrageschritt 51 verzichtet werden, so dass nach dem Schritt 50 direkt ein Übergang zum Abfrageschritt 46 erfolgt. In einer noch einfacheren Ausführungsvariante kann auch auf die zyklische Betätigung des Entlüftungsventils 28 verzichtet werden, wobei dann optional wieder der Übergang zum Schritt 43 erfolgen kann.

In Abweichung der beschriebenen und als Flussdiagramm dargestellten seriellen Schrittfolge können insbesondere in der Praxis auch verschiedene Teilprogrammfolgen parallel ablaufen bzw. durch parallel nebeneinander arbeitende Steuermittel realisiert sein. Dies bedeutet zum Beispiel, dass erste Steuermittel zum Schließen des Belüftungsventils (27) und Öffnen des Entlüftungsventils (28) bei Vorgabe eines unter einem vorgebbaren Soll-Grenzwert (Psmin) liegenden Soll-Arbeitsdrucks (Ps) und zum Wiederschließen des Entlüftungsventils (28) nach Absinken des Ist-Arbeitsdrucks (Pa) unter einen vorgebbaren Ist-Grenzwert (Pamin), zweite Steuermittel zum zyklischen, jeweils kurzzeitigen Öffnen des Entlüftungsventils (28) während der Vorgabe eines unter dem vorgebbaren Soll-Grenzwert (Psmin) liegenden Soll-Arbeitsdrucks (Ps) und nach dem Schließen des Entlüftungsventils (28) durch die ersten Steuermittel und dritte Steuermittel zum Öffnen des Entlüftungsventils (28) bei Ansteigen des Ist-Arbeitsdrucks (Pa) über den vorgebbaren Ist-Grenzwert (Pamin) nebeneinander tätig sein können. Bezüglich des dargestellten und beschriebenen Flussdiagramms bedeutet dies, dass ein Ausstieg aus den Schleifen auch vor Erreichen der jeweiligen Minimalwerte z.B. bei Änderungen von Vorgaben oder Zuständen möglich ist.

Zur Durchführung der beschriebenen Funktionen enthält die elektronische Regelungseinrichtung 11 entsprechende Steuermittel, die in einem oder mehreren Mikrocontrollern realisiert sein können. Alternativ ist auch eine Realisierung durch einen ASIC oder einen anderen oder mehrere IC möglich.

## Patentansprüche

1. Vorgesteuerte Druckproportionalventilanordnung mit einer durch eine elektronische Regelungseinrichtung (11) angesteuerten Vorsteuerstufe (12) und einer ein Ventilglied (21) aufweisenden druckgeregelten Hauptstufe (13), wobei die Vorsteuerstufe (12) eine über ein elektrisch betätigbares Belüftungsventil (27) und ein elektrisch betätigbares Entlüftungsventil (28) mit Steuerdruck beaufschlagbare Vorsteuerkammer (17) aufweist, die durch eine auf das Ventilglied (21) zum Öffnen des Ventilsitzes (18) einwirkende bewegliche Trennwand (20) von einer Arbeitskammer (16) der Hauptstufe (13) getrennt ist, **dadurch gekennzeichnet, dass** die Regelungseinrichtung (11) erste Steuermittel zum Schließen des Belüftungsventils (27) und Öffnen des Entlüftungsventils (28) bei Vorgabe eines unter einem vorgebbaren Soll-Grenzwert (Psmin) liegenden Soll-Arbeitsdrucks (Ps) und zum Wiederschließen des Entlüftungsventils (28) nach Absinken des Ist-Arbeitsdrucks (Pa) unter einen vorgebbaren Ist-Grenzwert (Pamin) aufweist.

2. Druckproportionalventilanordnung nach Anspruch 1, **dadurch gekennzeichnet, dass** die Regelungseinrichtung (11) zweite Steuermittel zum zyklischen, jeweils kurzzeitigen Öffnen des Entlüftungsventils (28) während der Vorgabe eines unter dem vorgebbaren Soll-Grenzwert (Psmin) liegenden Soll-Arbeitsdrucks (Ps) und nach dem Schließen des Entlüftungsventils (28) durch die ersten Steuermittel aufweist.

3. Druckproportionalventilanordnung nach Anspruch 2, **dadurch gekennzeichnet, dass** das kurzzeitige Öffnen des Entlüftungsventils (28) jeweils während einer Zeitspanne von weniger als 1 Sekunde erfolgt.

4. Druckproportionalventilanordnung nach einem der vorhergehenden Ansprüche, **dadurch gekennzeichnet, dass** die Regelungseinrichtung (11) dritte Steuermittel zum Öffnen des Entlüftungsventils (28) bei Ansteigen des Ist-Arbeitsdrucks (Pa) über den vorgebbaren Ist-Grenzwert (Pamin) aufweist.

5. Druckproportionalventilanordnung nach einem der vorhergehenden Ansprüche, **dadurch gekennzeichnet, dass** der Soll-Grenzwert (Psmin) kleiner als 3 % des maximalen Arbeitsdrucks ist und vorzugsweise im Wesentlichen 1 % des maximalen Arbeitsdrucks beträgt und/oder dass der Ist-Grenzwert (Pamin) wesentlich kleiner ist und nahe am Wert Null liegt.

6. Druckproportionalventilanordnung nach einem der vorhergehenden Ansprüche, **dadurch gekennzeichnet, dass** die Steuermittel in der Regelungseinrichtung (11) als wenigstens ein Mikrocontroller ausgebildet sind.

7. Druckproportionalventilanordnung nach Anspruch 6, **dadurch gekennzeichnet, dass** der Mikrocontroller auch zur Druckregelung des Arbeitsdrucks (Pa) mittels des Belüftungsventils (27) und des Entlüftungsventils (28) ausgebildet ist.

8. Druckproportionalventilanordnung nach einem der vorhergehenden Ansprüche, **dadurch gekennzeichnet, dass** ein Drucksensor (33) als Istwertgeber zur Messung des Arbeitsdrucks (Pa) in der Arbeitskammer (16) oder im Bereich von deren Auslass (32) angeordnet und mit der Regelungseinrichtung (11) verbunden ist.

9. Druckproportionalventilanordnung nach einem der vorhergehenden Ansprüche, **dadurch gekennzeichnet, dass** die bewegliche Trennwand (20) als Membran oder Kolben ausgebildet ist.

10. Druckproportionalventilanordnung nach einem der vorhergehenden Ansprüche, **dadurch gekennzeichnet, dass** das Belüftungsventil (27) und das Entlüftungsventil (28) im nicht bestromten Zustand geschlossen sind.

11. Druckproportionalventilanordnung nach einem der vorhergehenden Ansprüche, **dadurch gekennzeichnet, dass** das Ventilglied (21) eine gegen die Öffnungsbewegung wirkende Feder (22) aufweist.

12. Druckproportionalventilanordnung nach einem der vorhergehenden Ansprüche, **dadurch gekennzeichnet, dass** das Ventilglied (21) einen in der Arbeitskammer (16) mündenden Entlüftungskanal (25) besitzt, der bei entsprechender Druckbeaufschlagung der Vorsteuerkammer (17) durch die bewegbare Trennwand verschließbar ist, insbesondere gegen die Kraft einer Feder (26).

## Claims

1. Piloted proportional pressure control valve assembly with a pilot stage (12) controlled by an electronic regulating device (11), and a pressure-regulated main stage (13) with a valve member (21), wherein the pilot stage (12) has a pilot chamber (17) which may be supplied with control pressure via an electrically actuable air supply valve (27) and an electrically actuable venting valve (28) and which is separated from an operating chamber (16) of the main stage (13) by a movable division wall (20) acting on the valve member (21) to open the valve seat (18), **characterised in that** the regulating device (11) has first control means for closing the air supply valve (27) and opening the venting valve (28), during the selection of a required operating pressure (Ps) lying below a presettable required limit value (Psmin) and for reclosing the venting valve (28) after the actual operating pressure (Pa) has fallen below a presettable actual limit value (Pamin).

2. Proportional pressure control valve assembly according to claim 1, **characterised in that** the regulating device (11) has second control means for the cyclical, in each case for a short time, opening of the venting valve (28) during the selection of a required operating pressure (Ps) lying below the presettable required limit value (Psmin) and after closing of the venting valve (28) by the first control means.

3. Proportional pressure control valve assembly according to claim 2, **characterised in that** the opening of the venting valve (28) for a short time is effected in each case for a period of less than 1 second.

4. Proportional pressure control valve assembly according to any of the preceding claims, **characterised in that** the regulating device (11) has third control means for opening the venting valve (28) when the actual operating pressure (Pa) rises above the presettable actual limit value (Pamin).

5. Proportional pressure control valve assembly according to any of the preceding claims, **characterised in that** the required limit value (Psmin) is less than 3% of the maximum operating pressure and preferably amounts to essentially 1% of the maximum operating pressure and/or that the actual limit value (Pamin) is substantially smaller and close to the value zero.

6. Proportional pressure control valve assembly according to any of the preceding claims, **characterised in that** the control means in the regulating device (11) are in the form of at least one microcontroller.

7. Proportional pressure control valve assembly according to claim 6, **characterised in that** the microcontroller is also designed for pressure regulation of the operating pressure (Pa) by means of the air supply valve (27) and the venting valve (28).

8. Proportional pressure control valve assembly according to any of the preceding claims, **characterised in that** a pressure sensor (33) is provided as actual value sensor to measure the operating pressure (Pa) in the operating chamber (16) or in the area of its outlet (32), and is connected to the regulating device (11).

9. Proportional pressure control valve assembly according to any of the preceding claims, **characterised in that** the movable division wall (20) is in the form of a membrane or piston.

10. Proportional pressure control valve assembly according to any of the preceding claims, **characterised in that** the air supply valve (27) and the venting valve (28) are closed in the non-energised state.

11. Proportional pressure control valve assembly according to any of the preceding claims, **characterised in that** the valve member (21) has a spring (22) acting against the opening movement.

12. Proportional pressure control valve assembly according to any of the preceding claims, **characterised in that** the valve member (21) has a vent passage (25) leading into the operating chamber (16) which may be closed by the movable division wall (20) under suitable pressurisation from the pilot chamber (17), in particular against the force of a spring (26).

## Revendications

1. Agencement de vanne de pression proportionnelle pré-contrôlé avec une étape de pré-contrôle (12) commandée par un dispositif de régulation (11) électronique et avec une étape principale de pression régulée (13) présentant un élément de vanne (21), sachant que l'étape de pré-contrôle (12) présente une chambre de pré-contrôle (17) soumise à l'action d'une pression de commande par l'intermédiaire d'une vanne d'aération (27) pouvant être activée électriquement et d'une vanne de dégagement d'air (28) pouvant être activée électriquement, laquelle chambre de pré-contrôle est séparée d'une chambre de travail (16) de l'étape principale de pression régulée (13) par une paroi de séparation (20) mobile agissant sur l'élément de vanne (21) afin d'ouvrir le siège de vanne (18), **caractérisé en ce que** le dispositif de régulation (11) présente des premiers moyens de commande servant à fermer la vanne d'aération (27) et à ouvrir la vanne de dégagement d'air (28), lorsqu'une pression de travail de consigne (Ps) inférieure à la valeur limite de consigne (Psmin) pouvant être prédéfinie est prédéfinie, et servant à fermer à nouveau la vanne de dégagement d'air (28) après la chute de la pression de travail réelle (Pa) sous une valeur limite réelle (Pamin) pouvant être prédéfinie.

2. Agencement de vanne de pression proportionnelle selon la revendication 1, **caractérisé en ce que** le dispositif de régulation (11) présente des deuxièmes moyens de commande servant à ouvrir cycliquement, respectivement en peu de temps la vanne de dégagement d'air (28) lorsqu'une pression de travail de consigne (Ps) inférieure à la valeur limite de consigne (Psmin) pouvant être prédéfinie est prédéfinie et après que la vanne de dégagement d'air (28) a été fermée par les premiers moyens de commande.

3. Agencement de vanne de pression proportionnelle selon la revendication 2, **caractérisé en ce que** l'ouverture de la vanne de dégagement d'air (28) de courte durée se produit respectivement pendant un laps de temps inférieur à 1 seconde.

4. Agencement de vanne de pression proportionnelle selon l'une quelconque des revendications précédentes, **caractérisé en ce que** le dispositif de régulation (11) présente des troisièmes moyens de commande servant à ouvrir la vanne de dégagement d'air (28) lorsque la pression de travail réelle (Pa) dépasse la valeur limite réelle (Pamin) pouvant être prédéfinie.

5. Agencement de vanne de pression proportionnelle selon l'une quelconque des revendications précédentes, **caractérisé en ce que** la valeur limite de consigne (Psmin) est inférieure à 3 % de la pression de travail maximale et s'élève de préférence essentiellement à 1 % de la pression de travail maximale, et/ou **en ce que** la valeur limite réelle (Pamin) est essentiellement inférieure et est quasi nulle.

6. Agencement de vanne de pression proportionnelle selon l'une quelconque des revendications précédentes, **caractérisé en ce que** les moyens de commande sont réalisés dans le dispositif de régulation (11) comme au moins un microcontrôleur.

7. Agencement de vanne de pression proportionnelle selon la revendication 6, **caractérisé en ce que** le microcontrôleur est réalisé également pour la régulation de la pression de travail (Pa) au moyen de la vanne d'aération (27) et de la vanne de dégagement d'air (28).

8. Agencement de vanne de pression proportionnelle selon l'une quelconque des revendications précédentes, **caractérisé en ce qu'**un capteur de pression (33) en tant qu'appareil transmetteur de valeur réelle pour la mesure de la pression de travail (Pa) est disposé dans la chambre de travail (16) ou dans la zone des sorties (32) de celle-ci, et **en ce qu'**il est relié au dispositif de régulation (11).

9. Agencement de vanne de pression proportionnelle selon l'une quelconque des revendications précédentes, **caractérisé en ce que** la paroi de séparation (20) mobile est réalisée comme une membrane ou comme un piston.

10. Agencement de vanne de pression proportionnelle selon l'une quelconque des revendications précédentes, **caractérisé en ce que** la vanne d'aération (27) et la vanne de dégagement d'air (28) sont fermées lorsqu'elles ne sont pas alimentées en courant.

11. Agencement de vanne de pression proportionnelle selon l'une quelconque des revendications précédentes, **caractérisé en ce que** l'élément de vanne (21) présente un ressort (22) agissant contre le mouvement d'ouverture.

12. Agencement de vanne de pression proportionnelle selon l'une quelconque des revendications précédentes, **caractérisé en ce que** l'élément de vanne (21) possède un canal de dégagement d'air (25) débouchant dans la chambre de travail (16), lequel peut être fermé en cas d'alimentation en pression correspondante de la chambre de pré-contrôle (17), par la cloison de séparation pouvant être déplacée, en particulier contre la force d'un ressort (26).
